# EUROPEAN PATENT APPLICATION

(11) **EP 3 150 997 A1**
(43) Date of publication of application: **05.04.2017**
(21) Application number: 15382481.8
(22) Date of filing: 02.10.2015
(51) Int. Cl.: G01N 21/85

(54) **NON-MAGNETIC INSERTION PROBE FOR SPECTROSCOPIC MEASUREMENTS**

(71) Applicant: Fundació Institut Català d'Investigació Química, 43007 Tarragona (ES); Institució Catalana de Recerca i Estudis Avançats, 08010 Barcelona (ES); Consejo Superior de Investigaciones Cientificas (CSIC), 28006 Madrid (ES)
(72) Inventor: GALÁN MASCAROS, José Ramón, 46007 VALENCIA (ES); SÁENZ DE PIPAÓN, Cristina, 26004 LOGROÑO (La Rioja) (ES); LEÓN CALLEJON, José, Luis, 43205 TARRAGONA (ES); PÉREZ HERNÁNDEZ, Javier, 43007 TARRAGONA (ES); CAMÓN LASHERAS, Agustín, 50009 ZARAGOZA (ES)
(74) Representative: Carpintero Lopez, Francisco

(57) **Abstract**

A non-magnetic insertion probe for spectroscopic measurements comprising a hollow optic rod (1), an experimental space sealer (2), a sample holder (3) provided with a sample space (3-2), and at least two optic fiber guides (3-3) that traverse the sealer (2), the rod (1) and the sample holder (3), a first or irradiating guide guiding the light towards the sample space (3-2) and a second or collecting guide guiding the light from the sample space to the exterior of the probe. The materials and design of the probe allow for spectroscopic measurements inside a cryostat.

## Description

### BACKGROUND OF THE INVENTION

### Field of the Invention

The present invention relates to a sample probe for use under high vacuum and at very low temperatures. In particular, it relates to a non-magnetic insertion sample probe for spectroscopy in a controlled environment.

### Description of the Related Art

Insertion probes allow inserting samples into commercial cryostats for taking measurements of physical properties under controlled environments and temperatures. For spectroscopic measurements, when light irradiation is needed, commercial cryostats are typically equipped with quartz windows. Although costly to manufacture and maintain, these cryostats are useful for monitoring the spectroscopic properties under other stimuli. However, their use is cumbersome, due to the long distance between the irradiation source, the sample and the detection system, since the exterior ring of a cryostat is typically over 5 cm wide. This brings about signal losses and difficult alignment, and results in problematic use when the samples are small or non-uniform, or low intensity light sources are being used. In addition, the incorporation of windows is even more difficult in more complex cryostats, such as those incorporating superconducting magnets, for example, to allow measurements under magnetic fields, since these are built around the sample space.

Currently, there are no insertion probes available for spectroscopic measurements of solids inside a cryostat. There are, however, spectroscopic insertion probes adapted to other media, such as the one disclosed in US 5418615, for example. This application shows an elongated probe for liquid samples working in transmission mode. Radiation passes through the sample at a gap formed in the probe housing. A single radiation transmission is used to avoid problems of radiation back scattering and sample reliability. Windows are provided at opposite sides of a gap in the probe to accommodate the shape of the beam in the gap, which may either be collimated or focused thereto. A retroreflector may be used to reverse the radiation direction in the probe. This probe, however, is not suitable for use with samples other than liquids. It cannot be used under vacuum, under controlled atmospheres in gas, under magnetic fields, under very low temperatures (down to 2 K), and under variable temperatures, since the mirrors contract at low temperatures, thus precluding light from being properly aligned at all temperature range. Furthermore, reflecting properties of the mirror also worsen at low temperatures. Therefore, it derives from the prior art that there is still a need to solve the problem of spectroscopic measurement under cryogenically controlled environments allowing the use of variable temperatures, working down to very low temperatures and supporting high vacuum conditions and magnetic fields.

### SUMMARY OF THE INVENTION

The present invention provides a non-magnetic insertion probe for performing spectroscopic experiments in a temperature range from 2 K to 400 K, with a spectral range from 200 to 1300 nm. The probe can work under high vacuum, under gas stream, and under high magnetic fields (> 10 T) and is useful for measurement of solid samples.

It can be used in single radiation transmission mode to avoid problems of radiation back scattering. The light beam inside and outside the probe is guided by fiber optic guides. The invention comprises three main parts: an optic rod, an experimental space sealer, and a sample holder. Optic fibers guide the light through the sample space in and out of the sample holder. At least one guide is bent such that light reverses direction towards the exterior, before or after passing through the sample. Optionally, both fiber guides can be bent. The fibers enter the experimental space through the sealer and optic rod. The sealer maintains the experimental space isolated from the exterior, preventing any leakage. The optic rod guides the fibers in the direction of the sample holder and can be constructed at variable length. Further advantageous embodiments are defined in the dependent claims.

### BRIEF DESCRIPTION OF THE DRAWINGS

To complete the description and provide for better understanding of the invention, a set of drawings is provided. Said drawings illustrate a preferred embodiment of the invention, which should not be interpreted as restricting the scope of the invention, but just as an example of how the invention can be carried out.
Figure 1 shows a front view of the probe of the invention.
Figure 2 is a detail of the vacuum sealer.
Figure 3 shows details of the sample holder (top view).
Figure 4 shows details of another embodiment of the probe of the invention (front view).
Figure 5 shows details of a preferred collimation system.
Figure 6 is a graph showing experimental results of absorption data from a solid sample of [Ru(2,2'-bipyridyl)₃][ClO₄][MnFe(oxalate)₃] obtained with the invention at 2 K from 380 nm to 518 nm.
Figure 7 is a graph showing experimental results of absorption data from a solid sample of [Ru(2,2'-bipyridyl)₃][ClO₄][MnFe(oxalate)₃] obtained with the invention at 2 K and in the presence of a magnetic field (up to 7 T).

### DESCRIPTION OF THE PREFERRED EMBODIMENTS

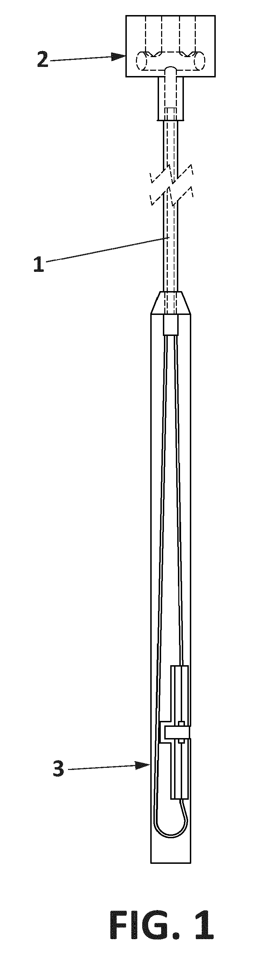

The sample probe is assembled from three parts, as can be seen in Figure 1: optic rod (1), experimental space sealer (2), and sample holder (3).

An optic fiber guides the light through the sample space in the sample holder. The fiber enters the experimental space through (2), which maintains the experimental space independent from the exterior, preventing any leakage. A hollow optic rod (of variable length) brings the fiber to the sample holder. In the sample holder a lens collimates the beam to maximize light irradiation at the sample. After the sample, a second lens collects the transmitted light into a second fiber, which brings the light out of the sample holder, trough the optic rod, and through the sealer, outside of the probe for analysis.

The sample space is suitable for placing solid samples, films or gels, in contrast with the prior art, which is adapted only for liquid probes.

The vacuum sealer and insertion rod together allow for the probe to be used in controlled environments under vacuum conditions, or under a gas (i.e. argon, helium, nitrogen, etc.) stream/atmosphere.

The design and manufacture materials of the invention allow its use in a temperature range from 2 K to 400 K, which includes cryogenic temperatures.

The invention further comprises non-magnetic materials, so it can be used in the presence of strong magnetic fields without disturbance and without affecting function. This last feature can especially be useful for measuring optical properties in the presence of a magnetic field and studying interdependence between both properties. The device of the present invention can therefore be adapted to any cryostat designed to measure magnetic properties and spectroscopic properties, simultaneously. The insert of the present invention takes advantage of the temperature control of a cryostat up to taking absorption/reflection, CD (circular dichroism), MCD (magnetic circular dichroism) and MChD (magnetochiral dichroism) measurements, with the possibility to apply magnetic fields.

Currently, when such measurements are taken in a cryostat, the only available solution is the use of normally custom-built cryostats with quartz windows from specialized companies, entailing high prices and costly maintenance. Use of windows brings about a long distance between the irradiation source, the detection system and the sample, since the cryostat outer ring is typically over 5 cm wide. This brings about signal losses, difficult alignment, problematic use of very small samples, or low intensity sources. In addition, the incorporation of windows is not possible (or cost-prohibited) in complex cryostats, such as those incorporating additional features, such as a superconducting magnet to generate magnetic fields, for example.

The invention allows for direct insertion of the light beam into the cryostat, preserving the controlled environment, and direct irradiation at less than 2 mm distance from the sample.

The sample location in the probe is open. This allows perfect thermal equilibrium with the environment.

The optic rod (1) is a hollow rod having an inner diameter (or inner dimension in case it is not cylindrical) at least greater than the sum of the diameter of the two optical fibers (typical diameter of the optical fiber > 50 µm) inside it, preferably of at least 2 mm, and having a minimum length of 20 mm. The variable diameter of the optical rod makes the sample probe adaptable to several cryostats, depending on the insertion system of each of them. The variable length allows placing the sample in the correct position inside the cryostat in each case to reach good thermalization, or at the center of the magnetic field flux, for example. The rod can also be equipped with several clamps adapting it for different equipment.

The rod can be made of several non-magnetic materials: most metals and alloys (i.e. non-magnetic stainless steel, quantalloy), synthetic organic polymers (i.e. polyamide, polymethacrylate, polystyrene) and glass. Low thermal conductivity and a minimum magnetic signal are two must-haves of the material. The range of operating temperatures of the optical fiber is preferably between 2 K and 400 K, more preferably between 100 K and 350 K, and even more preferably between 243 K and 343 K. The fibers should also have a bending ratio (minimum radius a fiber can be bent while maintaining function and lifetime) below half the diameter of the sample holder, to allow for a complete U-turn in this embodiment. Commercial multimode plastic fibers with transmittance at cryogenic temperatures of at least 95% of the nominal transmittance can be used in the sample holder.

The vacuum sealer (2) is a cap for the optic rod that allows preserving the controlled environment inside the cryostat. It is placed on the upper side of the hollow rod. It allows optic fibers to go in and out of the rod while preserving the sample environment inside the rod. The vacuum sealer makes the sample probe suitable for experiments under vacuum or in a controlled atmosphere.

The vacuum sealer comprises non magnetic materials, such as metals (i.e. aluminum, copper, stainless steel, quantalloy), synthetic polymers (i.e. Teflon, polyamide, polymethacrylate, polystyrene), glass or wood. Due to their low thermal conductivity and easy processing, Teflon or analogous polymers are preferred.

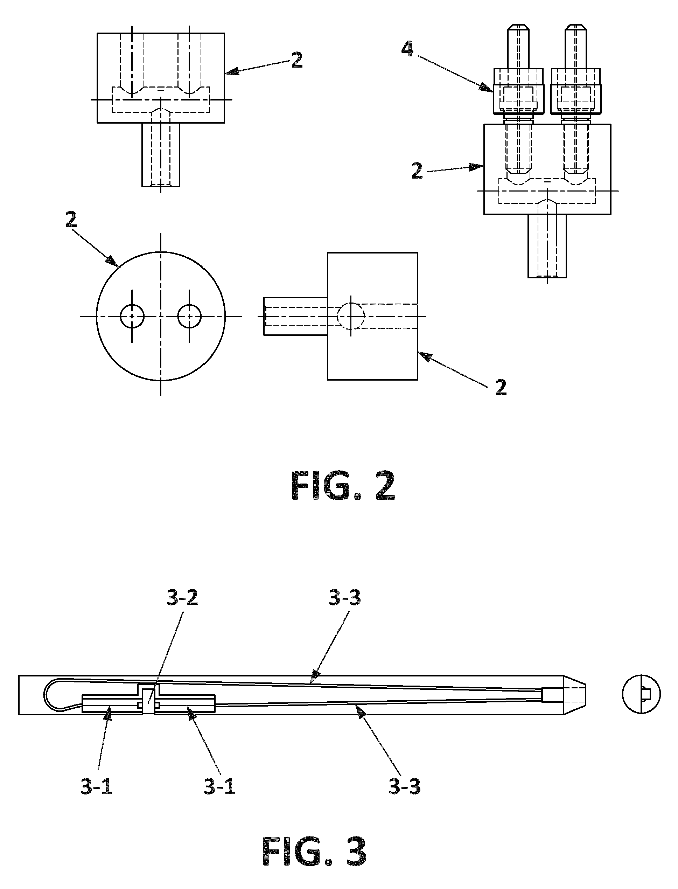

The hollow rod is inserted at the bottom of the vacuum sealer through a cylinder having an inner diameter equal to the outer diameter of the rod. The two optic fibers come out of the vacuum sealer through two holes on the upper side. To improve compatibility of the sample holder with other optical systems, the holes at the top of the vacuum sealer can be designed for bare fibers or to place different commercial connectors (SMA connectors, FC/PC connectors, FT/PC connectors). Figure 2 shows two examples of the vacuum sealer: with and without SMA connectors.

Figure 3 shows one embodiment of the sample holder (3). Its shape is preferably that of a half cylinder, but other shapes are possible (in that case, the diameter referred to in the following would be the longest inner dimension). It is made of any non-magnetic material with a low thermal expansion coefficient (< 200 x 10⁻⁶ K⁻¹) and able to support a temperature range between 2 K and 400 K. Because of their high precision and easy mechanization, non-magnetic metals, such as aluminium; or synthetic plastic polymers, such as polyamide, are preferred. The sample holder is provided with a slit to place the sample. The sample is fixed to the slit by glue (epoxy), cryogenic varnish or grease (high-vacuum cryogenic grease, such as Apiezon® N grease).

The variable length (preferably greater than 30 mm) and variable diameter (preferably greater than 9 mm) make the sample probe suitable for different existing equipment.

At least one of the two optic fibers needs to make a U-turn to complete the optical circuit, facing the end of the other fiber, as to locate the sample. The allowed working bending ratio of the fiber will limit the minimum diameter of the sample holder. Fiber optics with low working bending ratios are preferable in these kinds of setups. The bending ratio of the used fiber should be lower than half the diameter of the sample holder.

The use of a U-turn optical fiber instead of mirrors further diminishes intensity losses, since in this case there are no reflection losses and the optic path outside the fiber is minimized.

It is possible to arrange a collimation system (3-1) at the end of each optic fiber in order to increase optical efficiency of the system of the present invention. This system allows maximum irradiation of the sample and maximum light collection.

With reference to Figure 3, the sample is placed on and fixed to the slit (3-2) or sample space and irradiated by an optic fiber (3-3). It is possible to take measurements of any solid sample: pellets, powders, crystals, gels, films, etc.

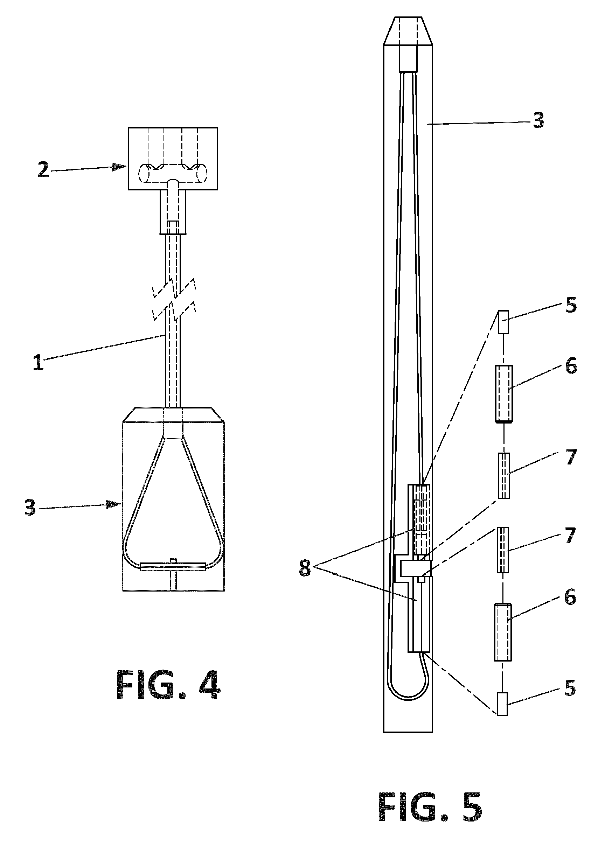

An example of the assembled optical components of the collimation system (3-1) can be seen in Figure 5. A system with a borosilicate ferrule to align the fiber (5), a GRIN lens (graded-index lens) to collimate and focus light into the fiber core (7), and a borosilicate sleeve (6) to keep all the parts together is proposed.

Due to the low thermal expansion coefficient of these materials, no significant stress that could crack the optical means has been identified. The materials can be glued by using any varnish or glue able to perform under vacuum conditions and cryogenic temperatures.

Polarization maintaining fibers are preferred when polarized light is required, as for polarization-dependent spectroscopic experiments (circular dichroism, magnetic circular dichroism, etc.).

If the inner diameter of the cryostat is wide enough (> 30 mm), a second embodiment of the sample holder is possible (Figure 4). In this variation both optic fibers bend only 90°. Using two 90° turns (instead of one U-turn) is advantageous because it allows diminishing the signal loss associated to high bending of the fibers. Additionally, it also allows using larger diameter optic fibers.

To facilitate sample handling and to improve sample thermalization, a non-magnetic metallic plate (for example, made of copper) can be used as sample support fixed to the slit by the side, and provided with an inner aperture, allowing light transmission. The solid sample can be fixed onto this support with glue (epoxy), cryogenic varnish or grease (high-vacuum cryogenic grease, such as Apiezon® N), leaving the central part of the sample on top of the inner aperture.

As it is used herein, the term "comprises" and derivations thereof (such as "comprising", etc.) should not be understood in an excluding sense, i.e., these terms should not be interpreted as excluding the possibility that what is described and defined may include further elements, steps, etc.

On the other hand, the invention is obviously not limited to the specific embodiment(s) described herein, but also encompasses any variations that may be considered by any person skilled in the art (for example, as regards the choice of materials, dimensions, components, configuration, etc.) to be within the general scope of the invention as defined in the claims.

### EXAMPLES

### Example 1: An insertion probe for a MPMS-XL Quantum Design susceptometer.

The optic rod (1) was made of needle temper stainless steel for the upper part and quantalloy (silicon copper alloy) for the lower part. The total length was 120 cm (100 cm of needle temper stainless steel and 20 cm of quantalloy). Outer diameter was 2.5 mm, and inner diameter was 1.5mm. It was also equipped with a clamp adapted to the MPMS-XL equipment to take full advantage of the system used to position the sample in the middle of the magnetic field. The experimental space sealer (2) was made of Teflon, with a diameter of 20mm and a total length of 24mm. It was designed to insert two SMA connectors to its upper side. The sample holder (3) was fabricated in polyamide (PA) by selective laser sintering (SLS). In this example, the collimation package includes: borosilicate ferrules of inner diameter = 0.250mm, outer diameter = 1.8mm and length = 8mm; grin lens GRIN2306A and the grin/ferrule sleeve 51-2800-1800 (Thorlabs). The ferruled fibers were polished to increase the illumination and light collection. Due to the low thermic expansion coefficient of these materials, no significant stress that could crack the optical package has been identified. The materials were glued by using GE 7031 varnish. The optical fiber selected for the prototype was Corning® ClearCurve® VSDN® Optical Fiber. This plastic fiber has a typical induced attenuation of 2.0dB, after half a turn with a bending ratio of 1.5mm, a Numerical Aperture (NA) of 0.290 and a core diameter of 80µm.

The vacuum sealer, optical rod and sample holder were assembled by interference fit and the joint reassured and sealed by GE varnish. This set-up is adjusted to work in a Quantum Design MPMS-XL susceptometer, which allows cryogenic temperatures between 1.8 and 400 K; and applied magnetic fields up to 7 T.

### Example 2: Measurement of the absorption spectra of [Ru(2,2'-bipyridyl)₃][ClO₄][MnFe(oxalate)₃] at very low temperatures.

A suspension of the compound [Ru(2,2'-bipyridyl)₃][ClO₄][MnFe(oxalate)₃] (10 mg) in a dichloromethane solution (20 mL) of 100 mg of polymethylmetacrylate (PMMA) were left to dry to obtain a thin plastic film of [Ru(2,2'-bipyridyl)₃][ClO₄][MnFe(oxalate)₃] in PMMA of thickness ≈ 0.5 mm. A 3x6mm piece of this film was fixed by GE varnish to the sample slit of example 1 and inserted in a QD MPMS-XL7. The temperature was fixed at 10 K, and the absorption spectra were collected with the following methodology:
- Light source: The light source was a Polychrome V from Till Photonics equipped with a 150W Xenon high stability lamp Tilluxe P45. A wavelength between 380nm and 700nm can be selected.
   The output beam was splitted by a beam splitter (90/10). The beam with lower intensity was used as reference beam; while the major part was used to irradiate the sample (object beam).
- Light detector: The light transmitted by the sample and the reference beam were received into a photosensor module Hammamatsu H9305-04. The noise was reduced by synchronous detection using optical choppers, and the signals were detected using a Stanford lock-in amplifier SR830.
- Transmission analysis: The transmission signal was averaged (≥ 20 data points/nm) and normalized to the reference beam.

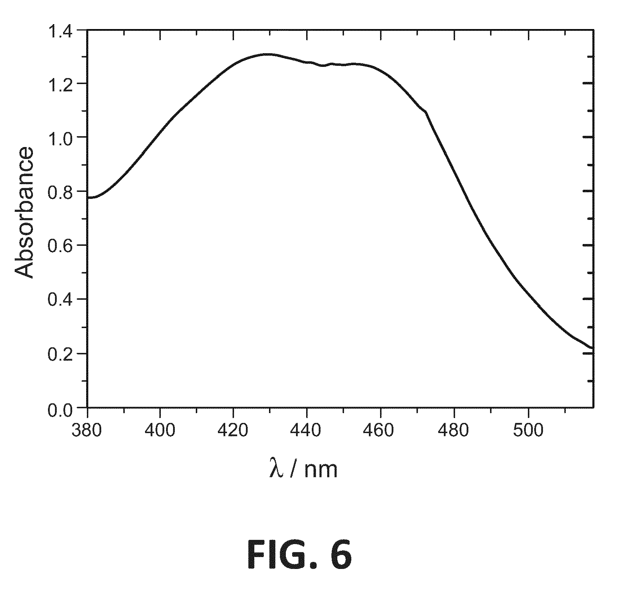

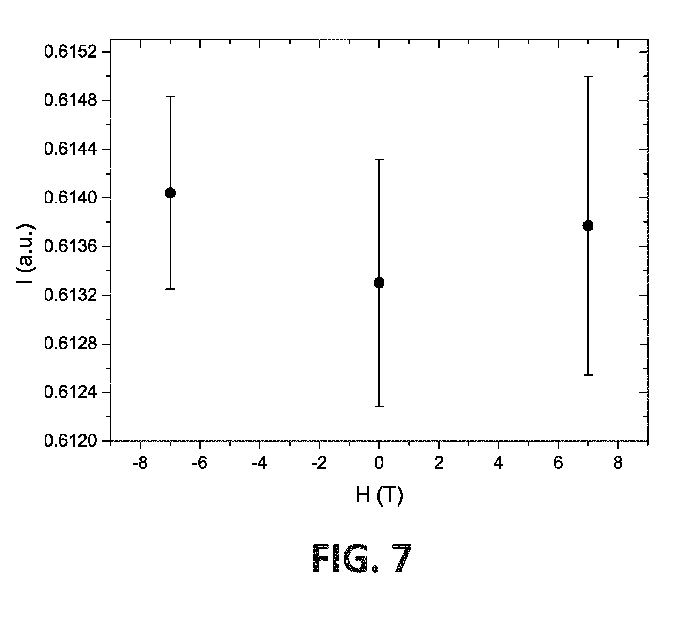

The corresponding absorbance data is shown in Figures 6 and 7.

## Claims

1. Non-magnetic insertion probe for spectroscopic measurements comprising a hollow optic rod (1), an experimental space sealer (2), a sample holder (3) provided with a sample space (3-2), and at least two optic fiber guides (3-3) that traverse the sealer (2), the rod (1) and the sample holder (3), one optic fiber for guiding the light towards the sample space (3-2) and the second optical fiber for guiding the light from the sample space to the exterior of the probe, **characterized in that** all the parts are made of non-magnetic materials with thermal expansion coefficient of less than 200 x 10⁻⁶ K⁻¹ and able to support a temperature range between 2 K and 400 K, and at least one of the guides is bent such that the end of both fibers face off, so the irradiation light beam trespasses the sample, can be collected after the sample, and guided through the rod and the sealer to the exterior.

2. Insertion probe according to claim 1 wherein the bending ratio of the bent guide is smaller than half the diameter of the sample holder.

3. Insertion probe according to claim 1 wherein both guides are bent before the sample space.

4. Insertion probe according to any of the preceding claims further provided with a metallic plate for mounting the sample into the sample holder, the plate being provided with an inner aperture for light transmission.

5. Insertion probe according to any of the preceding claims further provided with a collimation means (3-1) placed after the first guide and optionally before the second guide.

6. Insertion probe according to any of the preceding claims provided with a GRIN lens for collimating and focusing light into the second guide.

7. Insertion probe according to any of the preceding claims wherein the guides are polarization maintaining optical fibers.
